# EUROPEAN PATENT APPLICATION

(11) **EP 4 613 591 A1**
(43) Date of publication of application: **10.09.2025**
(21) Application number: 23896593.3
(22) Date of filing: 21.11.2023
(51) Int. Cl.: B60W 30/06, B60W 60/00

(54) **PATH PLANNING METHOD AND APPARATUS, AND VEHICLE**

(30) Priority: 29.11.2022 CN 202211510199
(71) Applicant: Shenzhen Yinwang Intelligent Technologies Co., Ltd., Shenzhen, Guangdong 518129 (CN)
(72) Inventor: MENG, Han, Shenzhen, Guangdong 518129 (CN); CHEN, Cheng, Shenzhen, Guangdong 518129 (CN); ZHANG, Yu, Shenzhen, Guangdong 518129 (CN); WANG, Xinyu, Shenzhen, Guangdong 518129 (CN)
(74) Representative: Pfenning, Meinig & Partner mbB
(86) International application number: PCT/CN2023/132919
(87) International publication number: WO 2024/114441

(57) **Abstract**

Embodiments of this application provide a path planning method and apparatus, and a vehicle. The method includes: obtaining a first area in which a surmountable obstacle around a vehicle is located; and planning a traveling path based on the first area, where the traveling path includes a first location, the first location is a location at which a tire is located when the vehicle performs a gear shift operation, and the first location is outside the first area. Embodiments of this application may be applied to an intelligent vehicle or an electric vehicle, to help improve continuity and comfort of intelligent driving assistance, and help improve driving experience of a user.

## Description

This application claims priority to Chinese Patent Application No. 202211510199.3, filed with the China National Intellectual Property Administration on November 29, 2022, and entitled "PATH PLANNING METHOD AND APPARATUS, AND VEHICLE", which is incorporated herein by reference in its entirety.

### TECHNICAL FIELD

Embodiments of this application relate to the field of intelligent driving, and more specifically, to a path planning method and apparatus, and a vehicle.

### BACKGROUND

With intelligent development of vehicles, increasingly more vehicles are provided with an intelligent driving assistance function. For example, in a low-speed automatic parking process, a parking trajectory may be planned for the vehicle by using the intelligent driving assistance function. The parking trajectory may include a location at which the vehicle performs a gear shift operation, for example, a location at which the vehicle switches from a drive gear (D gear) to a reverse gear (R gear), or a location at which the vehicle switches from a reverse gear (R gear) to a drive gear (D gear). If the location at which the vehicle performs the gear shift operation is not properly planned, continuity and comfort of intelligent driving assistance may be affected, and driving experience of a user may be affected.

### SUMMARY

Embodiments of this application provide a path planning method and apparatus, and a vehicle, to help improve continuity and comfort of intelligent driving assistance, and help improve driving experience of a user.

The vehicle in this application may be a vehicle in a broad sense, and may be a transport means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreation device, a toy vehicle, and the like. A type of the vehicle is not limited in embodiments of this application.

According to a first aspect, a path planning method is provided. The method includes: obtaining a first area in which a surmountable obstacle around a vehicle is located; and planning a traveling path based on the first area, where the traveling path includes a first location, the first location is a location at which a tire is located when the vehicle performs a gear shift operation, and the first location is outside the first area.

In embodiments of this application, when the vehicle performs gear shift, the tire may be located outside the area in which the surmountable obstacle is located. This helps reduce control difficulty of the vehicle, avoids control overshoot or insufficient control precision in a control process, helps improve continuity and comfort of intelligent driving assistance, and helps improve driving experience of a user. In addition, this helps reduce safety accidents caused by collision between the vehicle and a surrounding obstacle, and helps improve vehicle safety.

In some possible implementations, the vehicle may be a front-drive vehicle, a rear-drive vehicle, or a four-wheel drive vehicle.

In some possible implementations, that the first location is outside the first area may be understood as that tires of the vehicle are all located on one side of the first area, or that the first location is outside the first area may be understood as that the first area is between a first tire and a second tire of the vehicle, and neither the first tire nor the second tire is in the first area. The first tire may be a tire that is on one side of the first area and that is close to the surmountable obstacle, and the second tire may be a tire that is on another side of the first area and that is close to the surmountable obstacle.

That neither the first tire nor the second tire is in the first area may be understood as that an area in which the first tire is in contact with the ground is outside the first area, and an area in which the second tire is in contact with the ground is outside the first area.

For example, that the first area is between the first tire and the second tire of the vehicle includes that the first area is in front of a left front wheel and a right front wheel, or the first area is between the right front wheel and a left rear wheel, or the first area is between the left rear wheel and a right rear wheel.

With reference to the first aspect, in some implementations of the first aspect, the planning a traveling path based on the first area includes: determining a gear shift cost function based on the first area, where the gear shift cost function represents that a cost of performing a gear shift operation in the first area is higher than a cost of performing a gear shift operation in a second area, and the second area is an area outside the first area; and planning the traveling path based on the gear shift cost function.

In embodiments of this application, the cost of performing the gear shift operation in the first area is higher than the cost of performing the gear shift operation in the second area. This can effectively prevent the vehicle in a traveling trajectory from performing the gear shift operation in the first area, help avoid control overshoot or insufficient control precision in a control process, help improve continuity and comfort of intelligent driving assistance, and help improve driving experience of a user.

With reference to the first aspect, in some implementations of the first aspect, the method further includes: determining a distance cost function based on the first area, where the distance cost function represents that a distance cost of traveling in the first area is less than a distance cost of traveling in the second area. The planning the traveling path based on the gear shift cost function includes: planning the traveling path based on the gear shift cost function and the distance cost function.

In embodiments of this application, the distance cost is used to balance the gear shift cost. When the vehicle enters the first area, a low distance cost may be used to guide the vehicle to quickly pass through the first area, so that a search speed can be improved, search nodes can be reduced, and time consumed for trajectory traveling planning can be reduced.

With reference to the first aspect, in some implementations of the first aspect, an end location to which the vehicle travels is a second location, and the planning a traveling path based on the first area includes: planning a first path based on the first area and the second location, where an end point of the first path is a third location; planning a second path based on the third location and a heuristic function, where an end point of the second path is the second location; and determining the traveling path based on the first path and the second path.

In embodiments of this application, a remaining traveling trajectory is determined based on the third location and the heuristic function. In this way, trajectory traveling planning efficiency can be further improved.

In some possible implementations, the second path is a shortest path between the third location and the second location.

With reference to the first aspect, in some implementations of the first aspect, before the planning a second path based on the third location and a heuristic function, the method further includes: determining that the second path does not include the first location.

In embodiments of this application, the remaining traveling trajectory determined based on the third location and the heuristic function may be checked, to help avoid that in the remaining traveling trajectory, the location at which the tire is located when the vehicle performs the gear shift operation is in the area in which the surmountable obstacle is located, help avoid control overshoot or insufficient control precision in a control process, help improve continuity and comfort of intelligent driving assistance, and help improve driving experience of a user.

With reference to the first aspect, in some implementations of the first aspect, the planning a traveling path based on the first area includes: determining a third area based on the first area, where the third area does not overlap with the first area, and the third area is an area in which the vehicle performs a gear shift operation after surmounting the surmountable obstacle, or the third area is an area in which the vehicle performs a gear shift operation before surmounting the surmountable obstacle; and planning the traveling path based on the third area.

In embodiments of this application, the third area is used as an optimization constraint for optimization, to obtain the traveling trajectory. In this way, it may be avoided that the location at which the tire is located when the vehicle performs the gear shift operation is in the area in which the surmountable obstacle is located. This helps avoid control overshoot or insufficient control precision in a control process, helps improve continuity and comfort of intelligent driving assistance, and helps improve driving experience of a user.

In some possible implementations, the third area may also be referred to as optimization space. The optimization space may be an area in which the vehicle is located when performing the gear shift operation after surmounting the surmountable obstacle, or an area in which the vehicle is located when performing the gear shift operation before surmounting the surmountable obstacle. Alternatively, the optimization space may be an area in which a front axle or a rear axle of the vehicle is located when the vehicle performs the gear shift operation after surmounting the surmountable obstacle, or an area in which a front axle or a rear axle of the vehicle is located when the vehicle performs the gear shift operation before surmounting the surmountable obstacle.

With reference to the first aspect, in some implementations of the first aspect, the determining a third area based on the first area includes: determining the third area based on the first area and another obstacle around the vehicle.

In embodiments of this application, the third area may be further determined with reference to information about the another obstacle around the vehicle, to avoid a safety accident with the another obstacle in a traveling process of the vehicle, and help improve safety of the vehicle.

With reference to the first aspect, in some implementations of the first aspect, before the obtaining a first area in which a surmountable obstacle around a vehicle is located, the method further includes: detecting that a user enables an automatic parking function; and obtaining information about a target parking spot, where the traveling path is a path along which the vehicle parks from a current location of the vehicle to the target parking spot.

In some possible implementations, the automatic parking function may be automatic parking assist (automatic parking assist, APA), remote parking assist (remote parking assist, RPA), auto valet parking (auto valet parking, AVP), or the like.

With reference to the first aspect, in some implementations of the first aspect, the surmountable obstacle includes a speed bump.

According to a second aspect, a path planning apparatus is provided. The apparatus includes: an obtaining unit, configured to obtain a first area in which a surmountable obstacle around a vehicle is located; and a path planning unit, configured to plan a traveling path based on the first area, where the traveling path includes a first location, the first location is a location at which a tire is located when the vehicle performs gear shift, and the first location is outside the first area.

With reference to the second aspect, in some implementations of the second aspect, the path planning unit is configured to: determine a gear shift cost function based on the first area, where the gear shift cost function represents that a cost of performing a gear shift operation in the first area is higher than a cost of performing a gear shift operation in a second area, and the second area is an area outside the first area; and plan the traveling path based on the gear shift cost function.

With reference to the second aspect, in some implementations of the second aspect, the apparatus further includes a first determining unit, configured to determine a distance cost function based on the first area, where the distance cost function represents that a distance cost of traveling in the first area is less than a distance cost of traveling in the second area. The path planning unit is configured to plan the traveling path based on the gear shift cost function and the distance cost function.

With reference to the second aspect, in some implementations of the second aspect, an end location to which the vehicle travels is a second location, and the path planning unit is configured to: plan a first path based on the first area and the second location, where an end point of the first path is a third location; plan a second path based on the third location and a heuristic function, where an end point of the second path is the second location; and determine the traveling path based on the first path and the second path.

With reference to the second aspect, in some implementations of the second aspect, the apparatus further includes a second determining unit, configured to determine that the second path does not include the first location.

With reference to the second aspect, in some implementations of the second aspect, the path planning unit is configured to: determine a third area based on the first area, where the third area does not overlap with the first area, and the third area is an area in which the vehicle performs a gear shift operation after surmounting the surmountable obstacle, or the third area is an area in which the vehicle performs a gear shift operation before surmounting the surmountable obstacle; and plan the traveling path based on the third area.

With reference to the second aspect, in some implementations of the second aspect, the path planning unit is configured to determine the third area based on the first area and another obstacle around the vehicle.

With reference to the second aspect, in some implementations of the second aspect, the apparatus further includes a detection unit, configured to detect that a user enables an automatic parking function; and the obtaining unit is further configured to obtain information about a target parking spot, where the traveling path is a path along which the vehicle parks from a current location of the vehicle to the target parking spot.

With reference to the second aspect, in some implementations of the second aspect, the surmountable obstacle includes a speed bump.

According to a third aspect, a path planning apparatus is provided, where the apparatus includes a processing unit and a storage unit, the storage unit is configured to store instructions, and the processing unit executes the instructions stored in the storage unit, so that the apparatus performs any possible method in the first aspect.

According to a fourth aspect, a path planning system is provided, where the system includes one or more sensors and a computing platform, and the computing platform includes any possible apparatus in the second aspect or the third aspect.

According to a fifth aspect, a vehicle is provided, where the vehicle includes any possible apparatus in the second aspect, or includes the apparatus in the third aspect, or includes the system in the fourth aspect.

According to a sixth aspect, a server is provided, where the server includes any possible apparatus in the second aspect or the third aspect.

According to a seventh aspect, a computer program product is provided, where the computer program product includes computer program code. When the computer program code is run on a computer, the computer is enabled to perform any possible method in the first aspect.

It should be noted that all or some of the computer program code may be stored in a first storage medium, where the first storage medium may be encapsulated together with a processor, or may be encapsulated separately from a processor. This is not specifically limited in embodiments of this application.

According to an eighth aspect, a computer-readable medium is provided, where the computer-readable medium stores program code. When the computer program code is run on a computer, the computer is enabled to perform any possible method in the first aspect.

According to a ninth aspect, an embodiment of this application provides a chip, where the chip includes a circuit, and the circuit is configured to perform any possible method in the first aspect.

### BRIEF DESCRIPTION OF DRAWINGS

FIG. 1 is a functional block diagram of a vehicle according to an embodiment of this application;
FIG. 2 is a diagram of a parking scenario;
FIG. 3 is a block diagram of a system according to an embodiment of this application;
FIG. 4 is a schematic flowchart of a path planning method according to an embodiment of this application;
FIG. 5 is a diagram of a gear shift cost according to an embodiment of this application;
FIG. 6 is a diagram of a distance cost according to an embodiment of this application;
FIG. 7 is a diagram of combining a gear shift cost and a distance cost according to an embodiment of this application;
FIG. 8 is a diagram of determining a traveling trajectory based on a cost function and a heuristic function according to an embodiment of this application;
FIG. 9 is another schematic flowchart of a path planning method according to an embodiment of this application;
FIG. 10 is another diagram of a parking scenario according to an embodiment of this application;
FIG. 11(a) to FIG. 11(d) are another diagram of a parking scenario according to an embodiment of this application; and
FIG. 12 is a block diagram of a path planning apparatus according to an embodiment of this application.

### DESCRIPTION OF EMBODIMENTS

The following describes the technical solutions in embodiments of this application with reference to the accompanying drawings in embodiments of this application. In the descriptions of embodiments of this application, "/" means "or" unless otherwise specified. For example, A/B may represent A or B. In this specification, "and/or" describes only an association relationship between associated objects and represents that three relationships may exist. For example, A and/or B may represent the following three cases. Only A exists, both A and B exist, and only B exists.

In embodiments of this application, prefixes such as "first" and "second" are used only to distinguish different described objects, and do not limit a location, a sequence, a priority, a quantity, or content of described objects. In embodiments of this application, use of a prefix word, for example, an ordinal number, used to distinguish between described objects does not constitute a limitation on the described objects. For descriptions of the described objects, refer to the descriptions of the context in the claims or embodiments. The use of such a prefix word should not constitute a redundant limitation. In addition, in description of embodiments, unless otherwise specified, "a plurality of" means two or more.

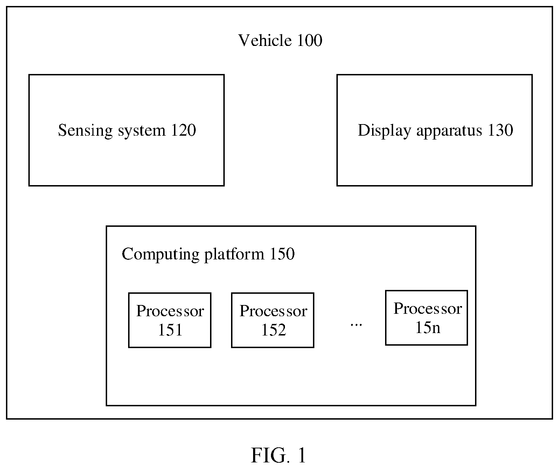

FIG. 1 is a functional block diagram of a vehicle 100 according to an embodiment of this application. The vehicle 100 may include a sensing system 120, a display apparatus 130, and a computing platform 150. The sensing system 120 may include one or more sensors that sense information about an ambient environment of the vehicle 100. For example, the sensing system 120 may include a positioning system, and the positioning system may be a global positioning system (global positioning system, GPS), a BeiDou system, or another positioning system. The sensing system 120 may further include one or more of an inertial measurement unit (inertial measurement unit, IMU), a lidar, a millimeter-wave radar, an ultrasonic radar, and a camera apparatus.

Some or all functions of the vehicle 100 may be controlled by the computing platform 150. The computing platform 150 may include one or more processors, such as processors 151 to 15n (n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may further be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory, to implement corresponding functions.

There are mainly two types of display apparatuses 130 in a cockpit: vehicle display, and projection display like head-up display (head-up display, HUD) apparatus. The vehicle display is a physical display, and is an important part of a vehicle-mounted infotainment system. A plurality of displays may be disposed in the cockpit, for example, a digital dashboard display, a central display, a display in front of a passenger in a front passenger seat (also referred to as a front-row passenger), a display in front of a rear-seat passenger on the left, and a display in front of a rear-seat passenger on the right. Even a window may be used as a display for display. The head-up display, also referred to as a head-up display system, is mainly configured to display driving information such as a speed and navigation on a display device (for example, a windshield) in front of a driver, to reduce line-of-sight transfer time of the driver, avoid a pupil change caused by a line-of-sight transfer of the driver, and improve driving safety and comfort. For example, the HUD includes a combiner-HUD (combiner-HUD, C-HUD) system, a windshield-HUD (windshield-HUD, W-HUD) system, or an augmented reality HUD (augmented reality HUD, AR-HUD) system. It should be understood that there may be another type of HUD systems with evolution of technologies. This is not limited in this application.

In a process of automatic parking of the vehicle, there may be protruding or recessed surmountable obstacles commonly including a speed bump, a small ditch, a small earth slope, and the like on a road surface. Such surmountable obstacles can be surmounted, but are different from the horizontal ground. The vehicle is easily stuck when surmounting the surmountable obstacles. In this case, the vehicle is required to output torque greater than that for the horizontal ground to assist in passing through. This imposes a very high requirement on a control system of the vehicle, and consequently increases control difficulty.

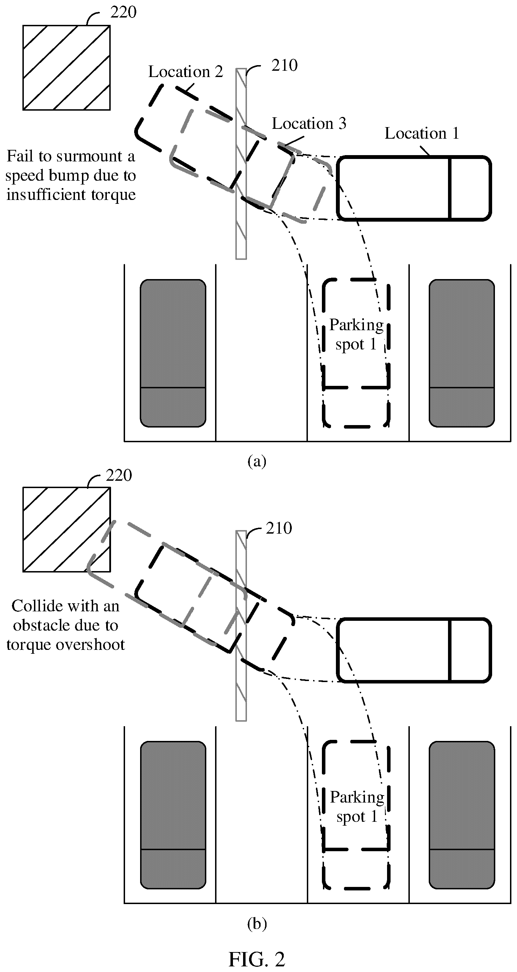

FIG. 2 is a diagram of a parking scenario.

As shown in (a) in FIG. 2, in a process in which a vehicle automatically parks into a parking spot 1 from a location 1, a location at which a gear shift operation is performed in a planned traveling trajectory is a location 2. At the location 2, a left front wheel and a right front wheel of the vehicle are located on a left side of a speed bump 210, a left rear wheel of the vehicle is on the speed bump 210, and a right rear wheel of the vehicle is located on a right side of the speed bump 210. If impact of the speed bump 210 on parking is not considered for the vehicle in advance, the vehicle may fail to surmount the speed bump 210 due to insufficient torque output by the vehicle. For example, due to the insufficient torque, after the left front wheel surmounts the speed bump 210, the right front wheel cannot surmount the speed bump 210. Consequently, the vehicle is stuck (for example, the vehicle is stuck at a location 3). When the vehicle is stuck at the location 3, a decision is made again. For example, the vehicle may choose to perform an operation of switching from a D gear to an R gear at the location 3. This causes a large error from a previously planned traveling trajectory, and causes insufficient control precision.

As shown in (b) in FIG. 2, when the vehicle is stuck at the location 3, the vehicle may be assisted in surmounting the speed bump 210 by increasing torque. However, due to torque overshoot (or control overshoot), the right front wheel of the vehicle may fail to brake in time after surmounting the speed bump 210, and collide with an obstacle (for example, a column 220) in an environment, or a risk of vehicle out-of-control may be caused.

When the foregoing vehicle is stuck by a surmountable obstacle, the vehicle may further need to make a traveling decision again. Consequently, vehicle decisions are discontinuous, continuity and comfort of intelligent driving assistance are affected, and driving experience of a user is affected.

Embodiments of this application provide a path planning method and apparatus, and a vehicle. An area in which a surmountable obstacle is located is obtained, so that it can be avoided that a location at which a tire is located when a vehicle performs gear shift is in the area in which the surmountable obstacle is located. This helps avoid control overshoot or insufficient control precision in a control process, helps improve continuity and comfort of intelligent driving assistance, and helps improve driving experience of a user. In addition, this also helps avoid a security risk and improve driving security of the user.

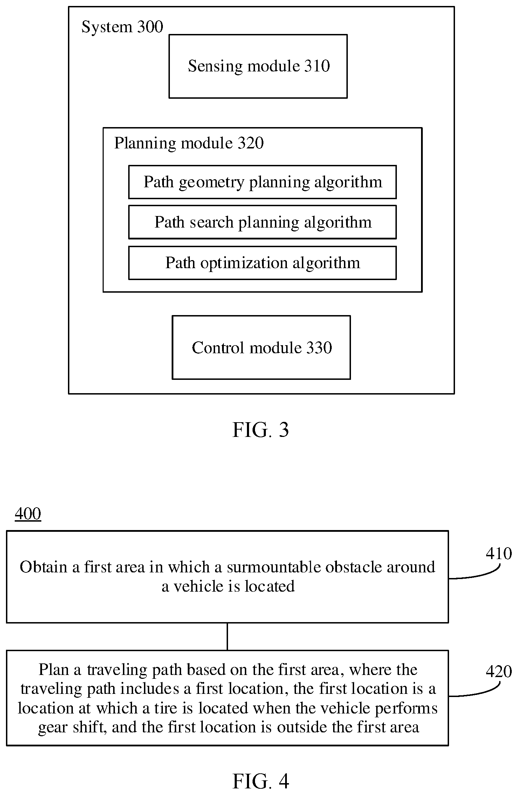

FIG. 3 is a block diagram of a system 300 according to an embodiment of this application. As shown in FIG. 3, the system 300 includes a sensing module 310, a planning module 320, and a control module 330. The sensing module 310 may perform data fusion on data collected by one or more sensors of a camera, a lidar, an ultrasonic radar, and a millimeter-wave radar, to obtain a grid map of obstacle information (for example, the obstacle information includes information about a surmountable obstacle), and send the grid map of the obstacle information to the planning module 320. The planning module 320 plans a traveling trajectory of a vehicle based on the grid map of the obstacle information by using one or more of a path geometric planning algorithm, a path search planning algorithm, or a path optimization algorithm, and outputs the traveling trajectory to the control module 330. The traveling trajectory includes a location at which a tire is located when the vehicle performs a gear shift operation, and the location at which the tire is located when the vehicle performs the gear shift operation is outside an area in which the surmountable obstacle is located. The control module 330 may control traveling of the vehicle based on the traveling trajectory. For example, the control module 330 may implement horizontal tracking and speed tracking of the traveling trajectory.

FIG. 4 is a schematic flowchart of a path planning method 400 according to an embodiment of this application. The method 400 may be performed by the vehicle 100 shown in FIG. 1, or the method 400 may be performed by the computing platform 150, or the method 400 may be performed by a system including the computing platform 150 and a sensor, or the method 400 may be performed by a system on a chip (system on a chip, SoC) on the computing platform 150, or the method 400 may be performed by a processor on the computing platform 150, or the method 400 may be performed by the system 300. The method 400 includes the following steps.

S410: Obtain a first area in which a surmountable obstacle around a vehicle is located.

Optionally, the obtaining a first area in which a surmountable obstacle around a vehicle is located includes: obtaining, based on data collected by a sensor outside a cockpit, the first area in which the surmountable obstacle is located.

For example, the sensor includes one or more of a camera, a lidar, a millimeter-wave radar, and an ultrasonic radar.

Optionally, the obtaining a first area in which a surmountable obstacle around a vehicle is located includes: obtaining, based on data sent by a cloud server, the first area in which the surmountable obstacle is located. For example, the vehicle may receive map information sent by a map server, where the map information includes information about the first area in which the surmountable obstacle is located; and the vehicle may determine, based on the map information, the first area in which the surmountable obstacle is located.

Optionally, the first area may be a projection area of the surmountable obstacle on the ground, or the first area may be an area obtained by multiplying a projection area of the surmountable obstacle on the ground by a coefficient (for example, the coefficient may be a coefficient greater than 1).

A shape of the first area is not specifically limited in embodiments of this application. For example, the shape of the first area may be a rectangle, an ellipse, or the like. In the following embodiments, an example in which the shape of the first area is a rectangle is used for description.

S420: Plan a traveling path based on the first area, where the traveling path includes a first location, the first location is a location at which a tire is located when the vehicle performs gear shift, and the first location is outside the first area.

Optionally, that the first location is outside the first area may be understood as that all tires of the vehicle are located on one side of the first area.

For example, the vehicle includes four tires, and when the vehicle performs a gear shift operation, the four tires are all located on one side of the surmountable obstacle. For example, in the application scenario shown in FIG. 2, the four tires may all be located on the left side or the right side of the speed bump 210.

Optionally, that the first location is outside the first area may alternatively be understood as that the first area is between a first tire and a second tire of the vehicle, and neither the first tire nor the second tire is in the first area. The first tire may be a tire that is on one side of the first area and that is close to the surmountable obstacle, and the second tire may be a tire that is on another side of the first area and that is close to the surmountable obstacle.

That neither the first tire nor the second tire is in the first area may be understood as that an area in which the first tire is in contact with the ground is outside the first area, and an area in which the second tire is in contact with the ground is outside the first area.

For example, that the first area is between the first tire and the second tire of the vehicle includes that the first area is in front of a left front wheel and a right front wheel, or the first area is between the right front wheel and a left rear wheel, or the first area is between the left rear wheel and a right rear wheel.

Optionally, the planning a traveling path based on the first area includes: determining a gear shift cost function based on the first area, where the gear shift cost function represents that a cost of performing a gear shift operation in the first area is higher than a cost of performing a gear shift operation in a second area, and the second area is an area outside the first area; and planning the traveling path based on the gear shift cost function.

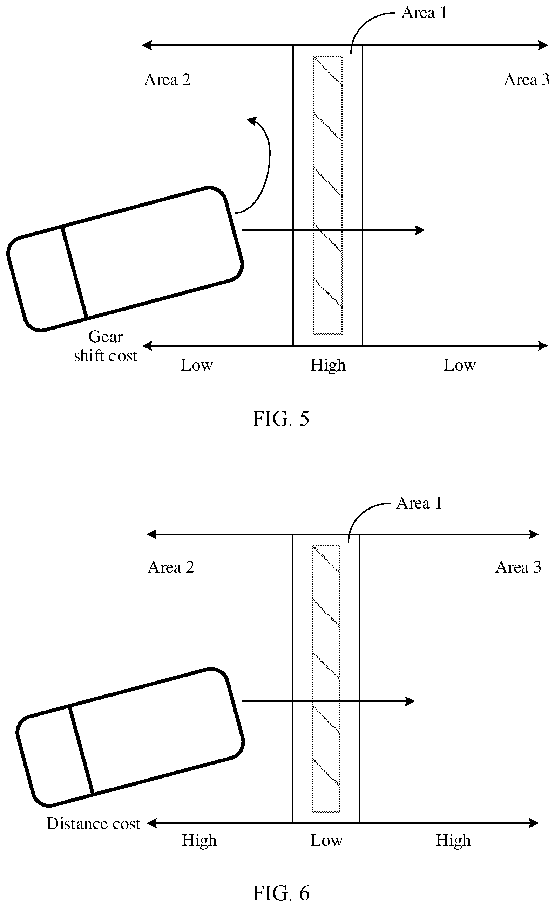

For example, FIG. 5 is a diagram of a gear shift cost according to an embodiment of this application. The area in which the surmountable obstacle is located is an area 1. An area on a left side of the area 1 in which the surmountable obstacle is located is an area 2, and the area 2 may be an area in which the vehicle is located before surmounting the surmountable obstacle. An area on a right side of the area 1 in which the surmountable obstacle is located is an area 3, and the area 3 may be an area in which the vehicle is located after surmounting the surmountable obstacle. A gear shift cost in the area 1 is higher than that in the area 2 or 3. In this way, after the gear shift cost in the area 1 in which the surmountable obstacle is located is increased, a planned trajectory in which gear shift is performed in the area 1 can be effectively avoided. In a process of planning the traveling path, the vehicle may choose to perform the gear shift operation in the area 2 or the area 3 with a lower cost.

The first area may be the area 1, and the second area may be the area 2 or the area 3.

The foregoing is described by using the gear shift cost as an example, and embodiments of this application are not limited thereto. For example, the gear shift cost may be further converted into a distance cost or a time cost. The gear shift cost may be converted into the distance cost. For example, traveling 1 meter (meter, m) in the area 1 is equivalent to traveling 10 meters in the area 2 or the area 3. The gear shift cost may be converted into the time cost. For example, traveling in the area 1 for 1 second (second, s) is equivalent to traveling in the area 2 or the area 3 for 10 seconds.

After the gear shift cost in the area 1 is increased, a gear shift operation may be effectively avoided at a location in the area 1. However, each time the vehicle passes through the surmountable obstacle, the vehicle passes through a large potential field. A parking scenario is used as an example. Because parking space in which the vehicle is located is narrow, the vehicle may be parked into a target parking spot only after a plurality of gear changes of the vehicle. In addition, when the gear shift operation needs to be performed across the area 1 for a plurality of times, a quantity of search nodes increases, and time consumption increases.

In an embodiment, the method 400 further includes: determining a distance cost function based on the first area, where the distance cost function represents that a distance cost of traveling in the first area is less than a distance cost of traveling in the second area. The planning the traveling path based on the gear shift cost function includes: planning the traveling path based on the gear shift cost function and the distance cost function.

For example, FIG. 6 is a diagram of a distance cost according to an embodiment of this application. As shown in FIG. 6, a distance cost of traveling by the vehicle in the area 1 is less than a distance cost of traveling in the area 2 or the area 3. In this way, the vehicle can be guided to quickly pass through the area 1 with a lower distance cost.

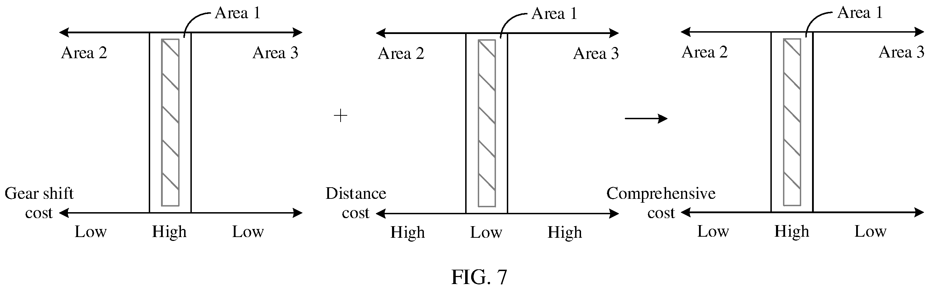

For example, FIG. 7 is a diagram of combining a gear shift cost and a distance cost according to an embodiment of this application. As shown in FIG. 7, the gear shift cost may be balanced by reducing the distance cost. In this way, when the vehicle enters the area 1, the vehicle may be guided to quickly pass through the area 1, so that a search speed can be accelerated. This helps reduce search nodes, and also helps reduce time consumed during path planning.

The foregoing is described by using the gear shift cost and the distance cost as an example, and embodiments of this application are not limited thereto. For example, path planning may be further performed by combining other costs. For example, other costs include a parking time cost, a steering cost, a turning angle change rate cost, and the like.

In an embodiment, search guiding may be implemented by using a cost function and a heuristic function together based on a path search planning algorithm.

For example, the path search planning algorithm includes but is not limited to an A* algorithm or a hybrid A* algorithm.

For example, the cost function is used to combine costs (for example, a distance cost, a gear shift cost, a turning angle cost, and a turning angle change rate cost) required by a passed path, and the heuristic function can be used to guide a searcher to accelerate searching to an end point by using curves that comply with vehicle kinematics, such as a Dubins curve and an RS curve, to help improve efficiency during path planning.

Optionally, an end location to which the vehicle travels is a second location, and the planning a traveling path based on the first area includes: planning a first path based on the first area and the second location, where an end point of the first path is a third location; planning a second path based on the third location and a heuristic function, where an end point of the second path is the second location; and determining the traveling path based on the first path and the second path.

Optionally, the second path is a shortest path between the third location and the second location.

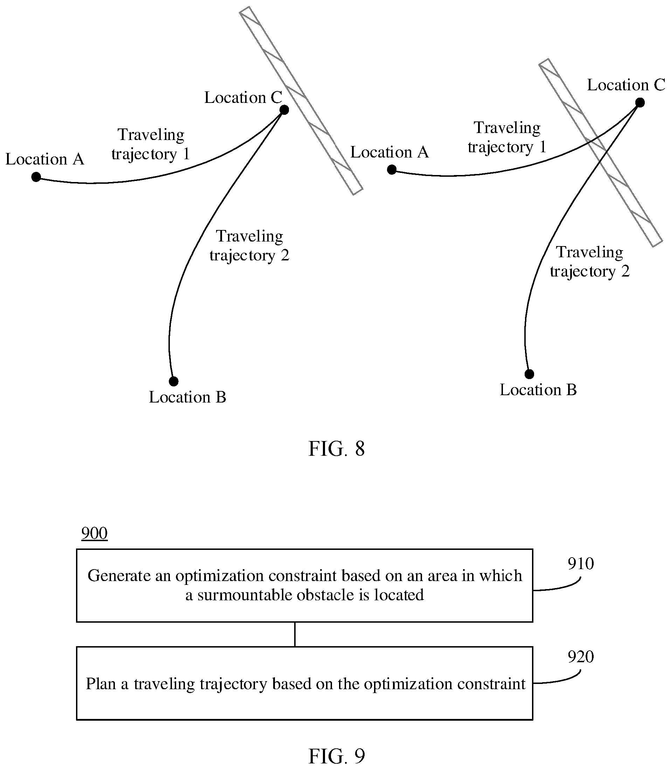

FIG. 8 is a diagram of determining a traveling trajectory based on a cost function and a heuristic function according to an embodiment of this application.

For example, a parking scenario is used as an example. A start location of the vehicle is a location A, and a location of a target parking spot is a location B. Node search is performed by using the foregoing gear shift cost function, and a traveling trajectory 1 from the location A to a location C may be planned. Then, a traveling trajectory 2 from the location C to the location B may be planned based on the location C and the heuristic function, and the traveling trajectory 2 may be a shortest traveling trajectory from the location C to the location B. In this way, the traveling trajectory 1 that is from the location A to the location C and that is determined based on the cost function and the traveling trajectory 2 that is from the location C to the location B and that is determined based on the heuristic function form a final traveling trajectory.

Optionally, before the planning a second path based on the third location and a heuristic function, the method further includes: determining that the second path does not include the first location.

For example, before the final traveling trajectory is determined, it may be determined that the traveling trajectory 2 planned based on the location C and the heuristic function does not include the first location.

In embodiments of this application, because an area in which a surmountable obstacle is located is considered during path planning, when the second path (for example, the traveling trajectory 2) determined based on the heuristic function is checked, in addition to checking whether collision with another obstacle occurs in the second path, checking whether the location at which the tire is located when the vehicle performs the gear shift operation is in the area in which the surmountable obstacle is located may be further performed. If the second path includes the location at which the tire is located when the vehicle performs the gear shift operation and the location is in the area in which the surmountable obstacle is located, the second path cannot be used as a final output, and node search further needs to be performed based on the cost function.

The second location may be the location B, and the third location may be the location C.

In an embodiment, the planning a traveling path based on the first area includes: determining a third area based on the first area, where the third area does not overlap with the first area, and the third area is an area in which the vehicle performs a gear shift operation after surmounting the surmountable obstacle, or the third area is an area in which the vehicle performs a gear shift operation before surmounting the surmountable obstacle; and planning the traveling path based on the third area.

For example, the third area may be determined based on a path optimization algorithm and the first area.

The foregoing path optimization algorithm may be a Euclidean space optimization algorithm. The Euclidean space optimization algorithm is one of important algorithms in path optimization algorithms. A kinematic model of the vehicle is constructed and boundaries of the obstacle are extracted, to generate travelable area space and design the cost function. A minimum cost solution that satisfies constraints is obtained as the final traveling trajectory. Because of complexity and nonlinearity of an optimization model, an iterative method is used for a plurality of times to obtain a converged solution.

The cost function involved in the foregoing Euclidean space optimization algorithm may include or may not include the foregoing gear shift cost.

In an embodiment, the foregoing search trajectory (for example, the traveling trajectory 1) determined based on the cost function may be used as an initial solution of the path optimization algorithm. In this way, efficiency of iterative solving can be greatly improved, and time consumption of path planning can be reduced.

FIG. 9 is a schematic flowchart of a path planning method 900 according to an embodiment of this application. The method 900 may be performed by the vehicle 100 shown in FIG. 1, or the method 900 may be performed by the computing platform 150, or the method 900 may be performed by a system including the computing platform 150 and a sensor, or the method 900 may be performed by a SoC on the computing platform 150, or the method 900 may be performed by a processor on the computing platform 150, or the method 900 may be performed by the system 300. The method 900 may be an implementation of planning the traveling path based on the third area. The method 900 includes the following steps.

S910: Generate an optimization constraint based on an area in which a surmountable obstacle is located.

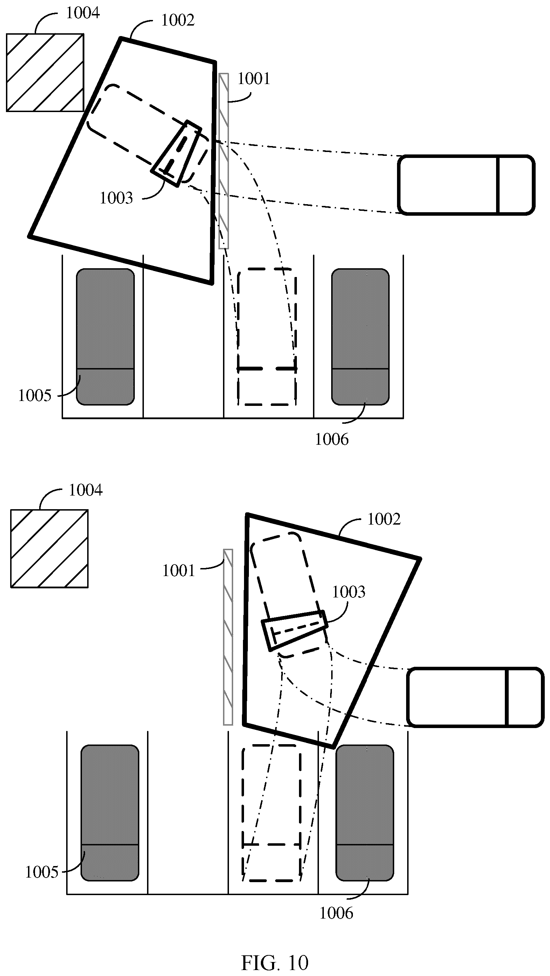

For example, FIG. 10 is another diagram of a parking scenario. A vehicle may obtain information about a speed bump 1001 via a sensor outside a cockpit. The information may be used to determine the area in which the surmountable obstacle is located.

The vehicle may generate the optimization constraint of a gear shift point in Euclidean space based on the area in which the surmountable obstacle is located.

The foregoing optimization constraint may also be understood as optimization space.

For example, as shown in FIG. 10, the constraint of the gear shift point may be generated, based on an area in which the speed bump 1001 is located, on a plane in which a center of a rear axle of the vehicle is located. For example, a travelable area 1002 of the vehicle may be generated. Then, an optimization area 1003 of the center of the rear axle is obtained through envelope removal. The travelable area 1002 or the optimization area 1003 may be used as an optimization constraint or optimization space used when the vehicle performs parking trajectory planning.

There is a correspondence between the foregoing travelable area 1002 and the optimization area 1003. For example, when performing the gear shift operation, the vehicle may be located in the travelable area 1002, and when the vehicle is located in the travelable area 1002, an area in which a center point of the rear axle is located is in the optimization area 1003.

The third area may be the travelable area 1002 or the optimization area 1003.

In an embodiment, the generating an optimization constraint based on an area in which a surmountable obstacle is located includes: generating the optimization constraint based on the area in which the surmountable obstacle is located and another obstacle around the vehicle.

For example, as shown in FIG. 10, when the optimization constraint is generated, an area in which a column 1004 and a stationary vehicle 1005 (or a stationary vehicle 1006) are located may be further considered. In this way, the vehicle may be located in the travelable area 1002, or when the center point of the rear axle of the vehicle is located in the optimization area 1003, the vehicle may not collide with the column 1004, the stationary vehicle 1005, or the stationary vehicle 1006.

S920: Plan a traveling trajectory based on the optimization constraint.

For example, the vehicle may plan a traveling trajectory from a start location to the travelable area 1002 and a traveling trajectory from the travelable area 1002 to a target parking spot, to obtain a final traveling trajectory. In the travelable area 1002, the vehicle may perform an operation of switching from a D gear to an R gear.

In an embodiment, in an optimization process, an area in which an initial surmountable obstacle is located may expand outwards by a specific range based on an actual surmountable obstacle area, so that an optimization result is as far away from the area as possible. For example, the actual surmountable obstacle area is a projection area of boundaries of the speed bump 1001 on the ground, and the area in which the initial surmountable obstacle is located may be an area obtained after the projection area of the boundaries of the speed bump 1001 on the ground expands outward by 0.5 m.

If the area in which the initial surmountable obstacle is located expands outwards on a basis of the actual surmountable obstacle area, the optimization space is occupied, and optimization may fail. If the optimization fails, the area in which the initial surmountable obstacle is located may be decreased (until the initial surmountable obstacle area is the same as the actual surmountable obstacle area), to gradually release the optimization space. Similar to the foregoing check performed on the traveling trajectory determined based on the heuristic function, when the traveling trajectory is planned by using the path optimization algorithm, protective post-check also needs to be performed, to avoid that when the optimization space is gradually released, a location at which a tire is located when the vehicle performs a gear shift operation is in the area in which the initial surmountable obstacle is located.

In an embodiment, when the traveling trajectory cannot be obtained through planning based on the optimization constraint in S920, the traveling trajectory may be determined based on the foregoing cost function and the heuristic function.

Optionally, before the obtaining a first area in which a surmountable obstacle around a vehicle is located, the method further includes: detecting that a user enables an automatic parking function; and obtaining information about a target parking spot, where the traveling path is a path along which the vehicle parks from a current location of the vehicle to the target parking spot.

Optionally, the surmountable obstacle includes a speed bump.

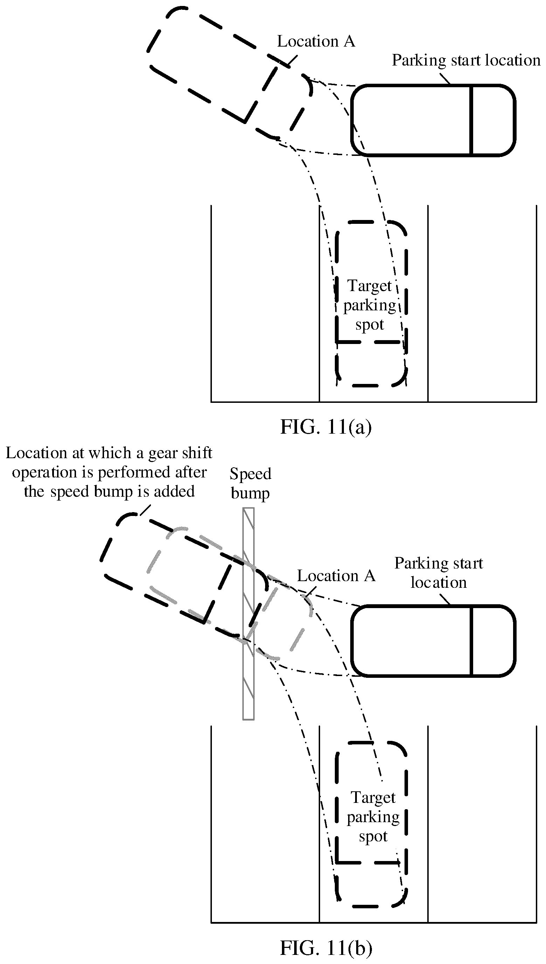

FIG. 11(a) to FIG. 11(d) are a diagram of an application scenario according to an embodiment of this application. An automatic parking scenario is used as an example in this application scenario.

For example, as shown in FIG. 11(a), the scenario is a parking scenario without a speed bump. When there is no speed bump in the parking scenario, a location at which a vehicle switches from a D gear to an R gear in a traveling path planned by the vehicle from a parking start location to a target parking spot is a location A.

For example, as shown in FIG. 11(b), the scenario is a parking scenario with the speed bump. The speed bump may be added at the location A. For example, the speed bump is located at the location A, which is near a left rear wheel of the vehicle, or the left rear wheel is just on the speed bump when the vehicle is at the location A. In this case, when planning a parking trajectory from the parking start location, the vehicle may consider an area in which the speed bump is located. In the traveling path planned by the vehicle, when the vehicle performs the gear shift operation, a location of a tire may not be in the area in which the speed bump is located. For example, all four tires of the vehicle may be located on a left side of the speed bump when the vehicle performs the gear shift operation in the traveling path planned by the vehicle, or the vehicle performs the gear shift operation after all the tires surmount the speed bump.

In an embodiment, for the parking scenario with the speed bump shown in FIG. 11(b), when the vehicle performs the gear shift operation in the traveling path planned by the vehicle from the parking start location to the target parking spot, the area in which the speed bump is located is between the left rear wheel and a right rear wheel. In this case, neither the left rear wheel nor the right rear wheel is on the speed bump, or areas in which the left rear wheel and the right rear wheel are in contact with the ground are outside the area in which the speed bump is located.

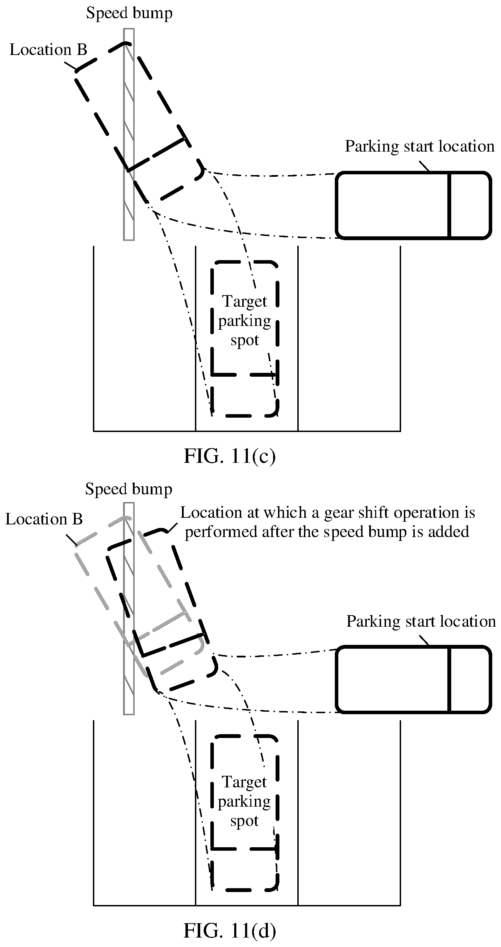

For example, as shown in FIG. 11(c), the scenario is a parking scenario without the speed bump. When there is no speed bump in the parking scenario, a location at which the vehicle switches from the D gear to the R gear in a traveling path 1 planned by the vehicle is a location B.

For example, as shown in FIG. 11(d), the scenario is a parking scenario with the speed bump. The speed bump may be added at the location B. For example, the speed bump is located at the location B, which is near the left rear wheel of the vehicle, or the left rear wheel is just on the speed bump when the vehicle is at the location B. In this case, when planning the parking trajectory from the parking start location, the vehicle may consider the area in which the speed bump is located. In the traveling path planned by the vehicle, when the vehicle performs the gear shift operation, the location of the tire may not be in the area in which the speed bump is located. For example, in the traveling trajectory, when the vehicle performs the gear shift operation, the area in which the speed bump is located is between a left front wheel and a front right rear wheel, and the left rear wheel and the right rear wheel are located on a right side of the speed bump. In this case, neither the left front wheel nor the right front wheel is on the speed bump, or areas in which the left front wheel and the right front wheel are in contact with the ground are outside the area in which the speed bump is located.

In an embodiment, when the vehicle performs the gear shift operation in the traveling path planned by the vehicle, locations of the four tires may alternatively be on the right side of the speed bump.

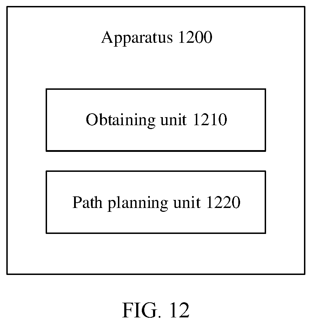

FIG. 12 is a block diagram of a path planning apparatus 1200 according to an embodiment of this application. As shown in FIG. 12, the path planning apparatus 1200 includes an obtaining unit 1210, configured to obtain a first area in which a surmountable obstacle around a vehicle is located; and a path planning unit 1220, configured to plan a traveling path based on the first area, where the traveling path includes a first location, the first location is a location at which a tire is located when the vehicle performs gear shift, and the first location is outside the first area.

Optionally, the path planning unit 1220 is configured to: determine a gear shift cost function based on the first area, where the gear shift cost function represents that a cost of performing a gear shift operation in the first area is higher than a cost of performing a gear shift operation in a second area, and the second area is an area outside the first area; and plan the traveling path based on the gear shift cost function.

Optionally, the apparatus 1220 further includes a first determining unit, configured to determine a distance cost function based on the first area, where the distance cost function represents that a distance cost of traveling in the first area is less than a distance cost of traveling in the second area. The path planning unit is configured to plan the traveling path based on the gear shift cost function and the distance cost function.

Optionally, an end location to which the vehicle travels is a second location, and the path planning unit 1220 is configured to: plan a first path based on the first area and the second location, where an end point of the first path is a third location; plan a second path based on the third location and a heuristic function, where an end point of the second path is the second location; and determine the traveling path based on the first path and the second path.

Optionally, the apparatus 1220 further includes a second determining unit, configured to determine that the second path does not include the first location.

Optionally, the path planning unit 1220 is configured to: determine a third area based on the first area, where the third area does not overlap with the first area, and the third area is an area in which the vehicle performs a gear shift operation after surmounting the surmountable obstacle, or the third area is an area in which the vehicle performs a gear shift operation before surmounting the surmountable obstacle; and plan the traveling path based on the third area.

Optionally, the path planning unit 1220 is configured to determine the third area based on the first area and another obstacle around the vehicle.

Optionally, the apparatus 1220 further includes a detection unit, configured to detect that a user enables an automatic parking function; and the obtaining unit is further configured to obtain information about a target parking spot, where the traveling path is a path along which the vehicle parks from a current location of the vehicle to the target parking spot.

Optionally, the surmountable obstacle includes a speed bump.

For example, the obtaining unit 1210 may be the computing platform in FIG. 1, or a processing circuit, a processor, or a controller on the computing platform in FIG. 1. For example, the obtaining unit 1210 is the processor 151 on the computing platform. The processor 151 may obtain data collected by one or more sensors, and determine, based on the data, the first area in which the surmountable obstacle is located.

For another example, the path planning unit 1220 may be the computing platform in FIG. 1, or a processing circuit, a processor, or a controller on the computing platform in FIG. 1. For example, the path planning unit 1220 is the processor 152 on the computing platform. The processor 152 may plan a traveling path for the vehicle based on the first area in which the surmountable obstacle is located. The traveling path includes a first location, the first location is a location at which a tire is located when the vehicle performs gear shift, and the first location is outside the first area.

The functions implemented by the obtaining unit 1210 and the functions implemented by the path planning unit 1220 may be implemented by different processors, or may be implemented by a same processor. This is not limited in embodiments of this application.

It should be understood that division of the units in the foregoing apparatus is merely logical function division. During actual implementation, all or some of the units may be integrated into one physical entity, or may be physically separated. In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of units in the apparatus. For example, the processor is a general purpose processor, for example, a CPU or a microprocessor, and the memory is a memory in the apparatus or a memory outside the apparatus. Alternatively, the units in the apparatus may be implemented in a form of hardware circuit, and functions of some or all of the units may be implemented by designing the hardware circuit. The hardware circuit may be understood as one or more processors. For example, in an implementation, the hardware circuit is an ASIC, and the functions of some or all of the units are implemented by designing a logical relationship between elements in the circuit. For another example, in another implementation, the hardware circuit may be implemented by using a PLD, for example, an FPGA, and the FPGA may include a large quantity of logic gate circuits, and a connection relationship between the logic gate circuits is configured by using a configuration file, to implement the functions of some or all of the foregoing units. All the units of the foregoing apparatus may be implemented in the form of software invoked by the processor, or may be implemented in the form of the hardware circuit, or some of the units are implemented in the form of software invoked by the processor, and remaining units are implemented in the form of the hardware circuit.

In embodiments of this application, the processor is a circuit having a signal processing capability. In an implementation, the processor may be a circuit having an instruction reading and running capability, for example, a CPU, a microprocessor, a GPU, or a DSP. In another implementation, the processor may implement a specific function by using a logical relationship of a hardware circuit, and the logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may be a hardware circuit designed for artificial intelligence, and may be understood as an ASIC, for example, an NPU, a TPU, or a DPU.

It can be seen that each unit in the foregoing apparatus may be one or more processors (or processing circuits) configured to implement the foregoing methods, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, these units are integrated together and implemented in a form of SoC. The SoC may include at least one processor, configured to implement any one of the methods or implement functions of the units of the apparatus. Types of the at least one processor may be different, for example, the at least one processor includes a CPU and an FPGA, a CPU and an artificial intelligence processor, or a CPU and a GPU.

An embodiment of this application further provides an apparatus. The apparatus includes a processing unit and a storage unit. The storage unit is configured to store instructions, and the processing unit executes the instructions stored in the storage unit, so that the apparatus is enabled to perform the methods or steps performed in the foregoing embodiments.

Optionally, if the apparatus is located in a vehicle, the processing units may be the processors 151 to 15n in FIG. 1.

An embodiment of this application further provides a path planning system. The path planning system includes one or more sensors and a computing platform. The computing platform includes the foregoing apparatus 1200.

An embodiment of this application further provides a vehicle. The vehicle may include the foregoing apparatus 1200 or the foregoing path planning system.

An embodiment of this application further provides a server. The server may include the foregoing apparatus 1200.

For example, the vehicle may send, to a server, data collected by a sensor outside a cockpit. The server may determine, based on the data, a first area in which a surmountable obstacle is located, so that the server may plan a traveling path based on the first area. The traveling path includes a first location, and the first location is a location at which a tire is located when the vehicle performs gear shift. The first location is outside the first area. The server may send the traveling path to the vehicle, so that the vehicle can control traveling of the vehicle based on the traveling path.

An embodiment of this application further provides a computer program product, where the computer program product includes computer program code. When the computer program code is run on a computer, the computer is enabled to perform the foregoing methods.

An embodiment of this application further provides a computer-readable medium, where the computer-readable medium stores program code. When the computer program code is run on a computer, the computer is enabled to perform the foregoing methods.

In an implementation process, steps in the foregoing methods can be implemented by using a hardware integrated logic circuit in a processor, or by using instructions in a form of software. The method disclosed with reference to embodiments of this application may be directly performed by a hardware processor, or may be performed by a combination of hardware and software modules in the processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein.

It should be understood that in embodiments of this application, the memory may include a read-only memory and a random access memory, and provide instructions and data to the processor.

It should be further understood that sequence numbers of the foregoing processes do not mean an execution sequence in various embodiments of this application. The execution sequence of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing systems, apparatuses, and units, refer to corresponding processes in the foregoing method embodiments. Details are not described herein.

In the several embodiments provided in this application, it should be understood that the disclosed systems, apparatuses, and methods may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A path planning method, comprising:
obtaining a first area in which a surmountable obstacle around a vehicle is located; and
planning a traveling path based on the first area, wherein the traveling path comprises a first location, and the first location is a location at which a tire is located when the vehicle performs gear shift, wherein
the first location is outside the first area.

2. The method according to claim 1, wherein the planning a traveling path based on the first area comprises:
determining a gear shift cost function based on the first area, wherein the gear shift cost function represents that a cost of performing a gear shift operation in the first area is higher than a cost of performing a gear shift operation in a second area, and the second area is an area outside the first area; and
planning the traveling path based on the gear shift cost function.

3. The method according to claim 2, wherein the method further comprises:
determining a distance cost function based on the first area, wherein the distance cost function represents that a distance cost of traveling in the first area is less than a distance cost of traveling in the second area; and
the planning the traveling path based on the gear shift cost function comprises:
planning the traveling path based on the gear shift cost function and the distance cost function.

4. The method according to claim 2 or 3, wherein an end location to which the vehicle travels is a second location, and the planning a traveling path based on the first area comprises:
planning a first path based on the first area and the second location, wherein an end point of the first path is a third location;
planning a second path based on the third location and a heuristic function, wherein an end point of the second path is the second location; and
determining the traveling path based on the first path and the second path.

5. The method according to claim 4, wherein before the planning a second path based on the third location and a heuristic function, the method further comprises:
determining that the second path does not comprise the first location.

6. The method according to claim 1, wherein the planning a traveling path based on the first area comprises:
determining a third area based on the first area, wherein the third area does not overlap with the first area, and the third area is an area in which the vehicle performs a gear shift operation after surmounting the surmountable obstacle, or the third area is an area in which the vehicle performs a gear shift operation before surmounting the surmountable obstacle; and
planning the traveling path based on the third area.

7. The method according to claim 6, wherein the determining a third area based on the first area comprises:
determining the third area based on the first area and another obstacle around the vehicle.

8. The method according to any one of claims 1 to 7, wherein before the obtaining a first area in which a surmountable obstacle around a vehicle is located, the method further comprises:
detecting that a user enables an automatic parking function; and
obtaining information about a target parking spot, wherein
the traveling path is a path along which the vehicle parks from a current location of the vehicle to the target parking spot.

9. The method according to any one of claims 1 to 8, wherein the surmountable obstacle comprises a speed bump.

10. A path planning apparatus, comprising:
an obtaining unit, configured to obtain a first area in which a surmountable obstacle around a vehicle is located; and
a path planning unit, configured to plan a traveling path based on the first area, wherein the traveling path comprises a first location, and the first location is a location at which a tire is located when the vehicle performs gear shift, wherein
the first location is outside the first area.

11. The apparatus according to claim 10, wherein the path planning unit is configured to:
determine a gear shift cost function based on the first area, wherein the gear shift cost function represents that a cost of performing a gear shift operation in the first area is higher than a cost of performing a gear shift operation in a second area, and the second area is an area outside the first area; and
plan the traveling path based on the gear shift cost function.

12. The apparatus according to claim 11, wherein the apparatus further comprises:
a first determining unit, configured to determine a distance cost function based on the first area, wherein the distance cost function represents that a distance cost of traveling in the first area is less than a distance cost of traveling in the second area, wherein
the path planning unit is configured to plan the traveling path based on the gear shift cost function and the distance cost function.

13. The apparatus according to claim 11 or 12, wherein an end location to which the vehicle travels is a second location, and the path planning unit is configured to:
plan a first path based on the first area and the second location, wherein an end point of the first path is a third location;
plan a second path based on the third location and a heuristic function, wherein an end point of the second path is the second location; and
determine the traveling path based on the first path and the second path.

14. The apparatus according to claim 13, wherein the apparatus further comprises:
a second determining unit, configured to determine that the second path does not comprise the first location.

15. The apparatus according to claim 10, wherein the path planning unit is configured to:
determine a third area based on the first area, wherein the third area does not overlap with the first area, and the third area is an area in which the vehicle performs a gear shift operation after surmounting the surmountable obstacle, or the third area is an area in which the vehicle performs a gear shift operation before surmounting the surmountable obstacle; and
plan the traveling path based on the third area.

16. The apparatus according to claim 15, wherein the path planning unit is configured to:
determine the third area based on the first area and another obstacle around the vehicle.

17. The apparatus according to any one of claims 10 to 16, wherein the apparatus further comprises:
a detection unit, configured to detect that a user enables an automatic parking function, wherein
the obtaining unit is further configured to obtain information about a target parking spot, wherein
the traveling path is a path along which the vehicle parks from a current location of the vehicle to the target parking spot.

18. The apparatus according to any one of claims 10 to 17, wherein the surmountable obstacle comprises a speed bump.

19. A path planning apparatus, comprising:
a memory, configured to store a computer program; and
a processor, configured to execute the computer program stored in the memory, to enable the apparatus to perform the method according to any one of claims 1 to 9.

20. A vehicle, comprising the path planning apparatus according to any one of claims 10 to 19.

21. A computer-readable storage medium, wherein the computer-readable storage medium stores a computer program, and when the computer program is executed by a computer, the method according to any one of claims 1 to 9 is implemented.

22. A chip, comprising a circuit, wherein the circuit is configured to perform the method according to any one of claims 1 to 9.
